(19)

Europäisches
Patentamt
European
Patent Office
Office européen
des brevets

(11)     **EP 2 108 804 B1**

(12)     **EUROPEAN PATENT SPECIFICATION**

(45) Date of publication and mention
of the grant of the patent:
**10.11.2010  Bulletin 2010/45**

(51) Int Cl.:
*F02D 41/40* *(2006.01)*     *F02D 41/24* *(2006.01)*

(21) Application number: **08425229.5**

(22) Date of filing: **08.04.2008**

(54) **Method for determining the actual offset value of an injector of an internal combustion engine**

Verfahren zur Bestimmung des tatsächlichen Versatzwerts einer Einspritzdüse eines Verbrennungsmotors

Procédé pour déterminer la valeur réelle de décalage d'un injecteur d'un moteur à combustion interne

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**14.10.2009  Bulletin 2009/42**

(73) Proprietor: **Magneti Marelli S.p.A.**
**Corbetta (MI) (IT)**

(72) Inventors:
• **Ruggiano, Renzo**
**40127 Bologna (IT)**
• **Sitta, Ugo**
**44045 Renazzo Cento (IT)**
• **Fanton, Fabrizio**
**40017 S. Giovanni in Persiceto (IT)**

(74) Representative: **Bergadano, Mirko et al**
**Studio Torta S.r.l.**
**Via Viotti, 9**
**10121 Torino (IT)**

(56) References cited:
**EP-A- 0 947 684**     **EP-A2- 1 077 321**
**DE-A1- 19 700 711**     **DE-B3-102006 019 894**
**US-A1- 2006 107 936**

**Description**

TECHNICAL FIELD

The present invention relates to a method for determining the actual offset value of an injector of an internal combustion engine.

BACKGROUND ART

All the automotive internal combustion engines use electronic injection for feeding the fuel to the cylinders, because electronic injection allows to meter the fuel with extreme accuracy and therefore allows to obtain an optimal combustion which minimizes the consumptions and the generation of undesired polluting substances.

Driving an injector includes knowing the injection features of the injector so that, given a desired amount of fuel to be injected, an electronic control unit of the injectors is able to determine the injection time, i.e. how long the injector must be kept open. In other words, the control algorithms of the combustion determine a desired amount of fuel to be injected to obtain an optimal combustion, therefore the injection time (i.e. the duration of the interval of time in which the injector is kept open), which leads to the injection of the desired amount of fuel to be injected, is determined according to the injection features of the injector.

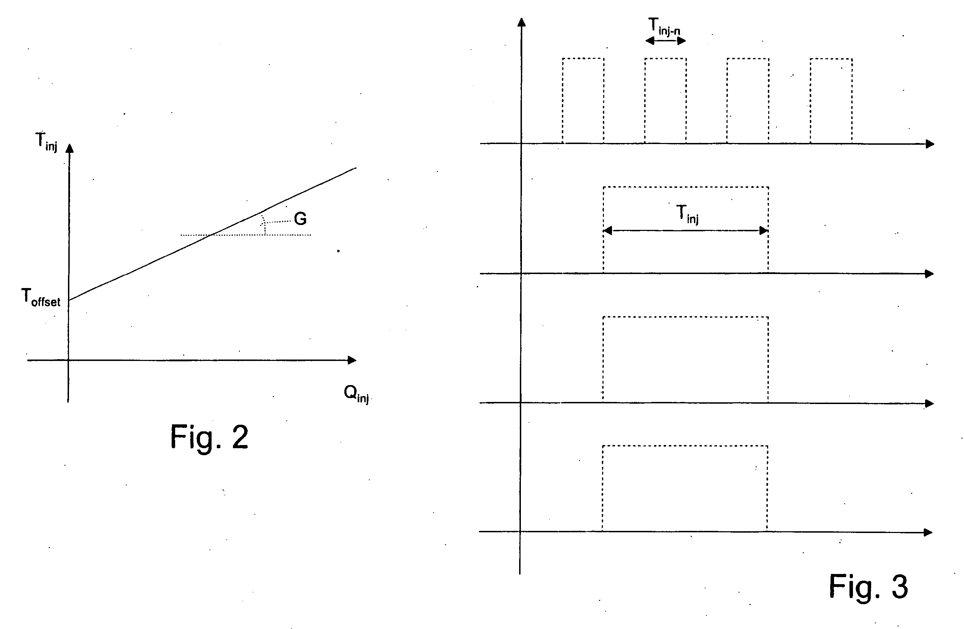

In a fuel injector, the function which connects the injection time to the amount of injected fuel is essentially linear (i.e. on the Cartesian plane it is represented by a line illustrated in figure 2) and is described by an offset value $T_{offset}$ and by a gain value G; in other words, the function which connects the injection time to the amount of fuel is represented by the following equation:

$$T_{inj} = G * Q_{inj} + T_{offset}$$

| | |
|---|---|
| $T_{in}$ | injection time |
| $Q_{inj}$ | amount of injected fuel |
| G | gain value |
| $T_{offset}$ | offset value |

The offset value of an injector is not constant, depending on the pressure difference across the injector and on the battery voltage (i.e. the power voltage of the injectors); consequently, vectors which provide the offset value according to the pressure difference across the injector and the battery voltage are normally stored in the electronic control unit of the injectors. The gain value of an injector is not constant, depending on the pressure difference across the injector; consequently, a vector which provides the gain value according to the pressure difference across the injector is normally stored in the electronic control unit of the injectors.

International standards about polluting emissions of automotive internal combustion engines are becoming increasingly strict, i.e. impose an increasingly low maximum level of polluting emissions. In order to attempt to limit the generation of undesired polluting substances to the maximum during combustion, the actual amount of injected fuel needs to be as similar as possible to the desired amount of fuel to be injected and therefore the actual (i.e. real) injection features of the injector needs to be as similar as possible to the nominal (i.e. design) features of the injector. In other words, the production dispersion (connected to manufacturing and material tolerances) and the behavioural drift due to ageing of the injectors must be restricted.

By way of example, the top range fuel injectors currently available on the market display a tolerance of approximately 5% with respect to nominal values, while it is estimated that, in the future, injectors displaying a tolerance of approximately 3% with respect to nominal values will need to be manufactured.

The reduction of production dispersion and the strengthening with respect to ageing are normally pursued by refining the construction techniques, the materials and the end-of-production inspections; however, all these interventions imply a considerable increase in manufacturing costs due to the necessary investments and to the increase of rejected parts during end-of-production inspections.

Patent application WO2005008050 describes to estimate the actual (i.e. real) injection features of each injector in an internal combustion engine, so as to be able to use the corresponding actual injection features for each injector instead of the nominal injection features; in this manner, it is possible to compensate for production dispersion and behavioural drift due to ageing of the injectors.

In order to estimate the actual (i.e. real) injection features of each injector, patent application WO2005008050A1 and US 20060/07936 suggests to wait for the internal combustion engine to be running at a stationary rate (in which the number of revolutions and the delivered power are constant), and then to compare some features of the combustion by feeding a certain amount of fuel in a single injection and feeding the same amount of fuel in several subsequent sub-injections. In other words, at a stationary rate, feeding a same amount of fuel in a single injection or in several subsequent sub-injections will have no effect on combustion only if the actual (i.e. real) injection features of each injector are identical to the nominal injection features; on the other hand, if the actual (i.e. real) injection features of each injector are different from the nominal injection features, then feeding a same amount of fuel in a single injection or in several subsequent sub-injections will determine combustion differences, thus by detecting and analyzing such differences it is possible to determine the deviation between the actual injection features and the nominal injection features.

However, the calculation method suggested by patent application WO2005008050A1 for determining and analyzing the combustion differences by feeding a same amount of fuel in a single injection or in several subsequent sub-injections is not very reliable and above all is not accurate; in other words, such a calculation method does not allow to estimate the actual injection features of the injectors with an accuracy lower than the manufacturing tolerance of the injectors themselves (i.e. its results are affected by estimation errors higher than the construction errors guaranteed by the manufacturer of the injectors) and is thus essentially pointless.

EP1077321A2 discloses a fuel injection control system for a diesel engine, in which the fuel injection can be divided in three subsequent sub-injections (or split injections) each having the same duration.

DISCLOSURE OF INVENTION

It is the object of the present invention to provide a method for determining the actual offset value of an injector of an internal combustion engine, the method being easy and cost-effective to implement and, specifically, being able to estimate the actual offset value of the injector with an accuracy higher than the manufacturing tolerance of the injector itself.

According to the present invention, a method for determining the actual offset value of an injector of an internal combustion engine is provided as claimed in the appended claims.

BRIEF DESCRIPTION OF THE DRAWINGS

The present invention will now be described with reference to the accompanying drawings, which show a non-limitative embodiment thereof, in which:

- figure 1 diagrammatically shows an internal combustion engine provided with an electronic control unit which implements the estimation method of the present invention;
- figure 2 shows a graphic representation of a Cartesian plane of the injection feature of the injectors of the internal combustion engine in figure 1;
- figure 3 shows the driving modes of the injectors of the internal combustion engine in figure 1 during the recognition of the actual injection features of an injector; and
- figure 4 shows the titration of the exhaust gases measured during an experimental recognition test of the actual injection features of an injector.

PREFERRED EMBODIMENTS OF THE INVENTION.

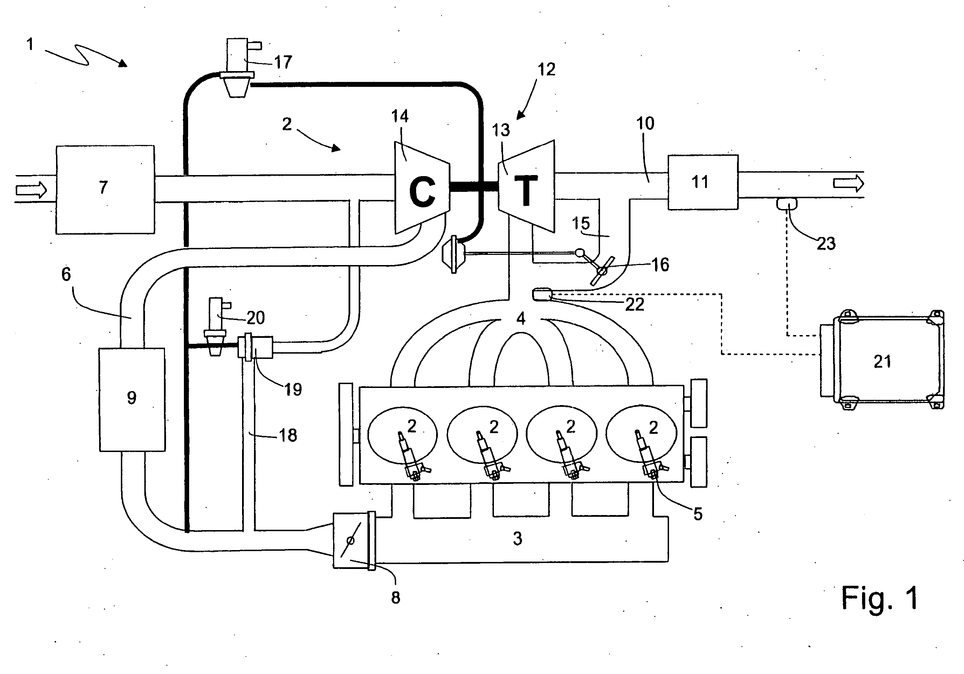

In figure 1, numeral 1 indicates as a whole an internal combustion engine supercharged by a turbocharger supercharging system.

The internal combustion engine 1 comprises four cylinders 2, each of which is connected to an intake manifold 3 by means of at least one corresponding intake valve (not shown) and to an exhaust manifold 4 by means of at least one corresponding exhaust valve (not shown). The fuel is injected into each cylinder 2 by means of a corresponding injector 5 coupled to the cylinder 2 itself.

The intake manifold 4 receives fresh air (i.e. air coming from the external environment) through an intake pipe 6, which is provided with an air cleaner 7 and is adjusted by a butterfly valve 8. An intercooler 9 for cooling the aspirated air is arranged along the intake pipe 6. To the exhaust manifold 5 there is connected an exhaust pipe 10 which feeds the exhaust gases produced by the combustion to an exhaust system, which discharges the gases produced by the combustion into the atmosphere and normally comprises at least one catalyzer 11 and at least one muffler (not shown) arranged downstream of the catalyzer 11.

The supercharging system of the internal combustion engine 1 comprises a turbocharger 12 provided with a turbine 13, which is arranged along the exhaust pipe 10 in order to rotate at high speed under the action of the exhaust gases expelled from the cylinders 3, and a compressor 14, which is arranged along the intake pipe 6 and is mechanically connected to the turbine 13 in order to be rotated by the turbine 13 itself and thus to increase the pressure of the air fed into the feeding pipe 6.

Along the exhaust pipe 10 a bypass pipe 15 is provided, which is connected in parallel to the turbine 13 so as to display the ends thereof connected upstream and downstream of the turbine 13 itself; along the bypass pipe 15 a wastegate valve 16 is arranged, which is adapted to adjust the flow rate of the exhaust gases which flow through the bypass pipe 15 and is driven by an actuator 17. Along the feeding pipe 6 a bypass pipe 18 is provided, which is connected in parallel to the compressor 14 so as to display the ends thereof connected upstream and downstream of the compressor 14 itself; along the bypass pipe 18 a Poff valve 19 is arranged, which is adapted to adjust the flow rate of fresh air which flows through the bypass pipe 18 and is driven by an actuator 20.

The internal combustion engine 1 is controlled by an electronic control unit 21, which governs the operation of all the components of the internal combustion engine 1, comprising the injectors 5. Specifically, the electronic control unit 21 is connected to a lambda probe 22 arranged upstream of the catalyzer 11 and to a lambda probe 23 arranged downstream of the catalyzer 11. The lambda probes 22 and 23 may be of the ON/OFF (switching) type or may be linear (i.e. of the UEGO type); in both cases, it is possible to determine the titre of exhaust gas upstream and downstream of the catalyzer 11 (by means of estimation algorithms known in the literature or by means of a direct measurement, respectively). If the lambda probe 22 is of the ON/OFF (switching) type, instead of estimating the exhaust gas titre upstream of the catalyzer 11, it is possible to estimate the percentage variation in the exhaust gas titre upstream of the catalyzer 11, for the purposes described below, because the estimation of the percentage variation of the exhaust gas titre is more accurate; in this case, the percentage variation in the exhaust gas titre is derived directly from the percentage variation of the titre control variable, obviously providing that possible adaptive strategies of the value of such variable are inhibited.

The injection features of the injectors 5 are stored in a memory of the electronic control unit 21 so that, given a desired amount $Q_{inj}$ of fuel to be injected, the electronic control unit 21 can determine the injection time $T_{inj}$ of each injector 5, i.e. how long the injector 5 must be kept open. In other words, the control algorithms of the combustion implemented in the electronic control unit 21 determine a desired amount $Q_{inj}$ of fuel to be injected to obtain an optimal combustion, therefore the injection time $T_{inj}$ (i.e. the duration of the interval of time in which the injector is kept open), which leads to the injection of the desired amount $Q_{inj}$ of fuel to be injected, is determined according to the injection features of each injector 5.

In each injector 5, the function which connects the injection time to the amount of injected fuel is linear (i.e. on the Cartesian plane it is represented by a line illustrated in figure 2) and is described by an offset value $T_{offset}$ and by a gain value G; in other words, the function which connects the injection time to the amount of fuel is represented by the following equation:

$$[1] \quad T_{inj} = G * Q_{inj} + T_{offset}$$

| $T_{inj}$ | injection time |
| --- | --- |
| $Q_{inj}$ | amount of injected fuel |
| G | gain value |
| $T_{offset}$ | offset value |

The offset value $T_{offset}$ of each injector 5 is not constant, but depends on the pressure difference across the injector 5 and on the battery voltage (i.e. the power voltage of the injectors 5); consequently, vectors which provide the offset value $T_{offset}$ according to the pressure difference across the injectors 5 and the battery voltage are normally stored in the electronic control unit 21. The gain value G of each injector 5 is not constant, but depends on the pressure difference across the injector 5; consequently, a vector which provides the gain value G according to the pressure difference across the injectors 5 is stored in the electronic control unit 21.

The nominal injection (i.e. design) features of the injectors 5 are initially stored (i.e. at the end of the assembly of the internal combustion engine 1) into the electronic control unit 21; however, the actual (i.e. real) injection features of each injector 5 may be more or less different from the nominal injection features within the range of manufacturing tolerance (currently not lower than 5%). A recognition strategy, which allows to estimate the corresponding actual injection features for each injector 5 with a margin of error lower than the manufacturing tolerance, is implemented in the electronic control unit 21; consequently, during the operation of the internal combustion engine 1 the electronic control unit 21 periodically performs such a recognition strategy to estimate the actual injection features of each injector 5.

The recognition strategy implemented in the electronic control unit 21 for estimating the actual injection features of each injector 5 is described below.

When the internal combustion engine 1 is running at a stationary rate, i.e. when the number of revolutions and the delivered power are constant, and thus the flow rate of aspirated air and the injected fuel amount are constant, it is possible to perform the recognition strategy to estimate the actual injection features of each injector 5. During a stationary rate, the recognition strategy consists in performing a single injection having a duration $T_{inj}$ and immediately afterwards in performing n subsequent sub-injections, each having a duration $T_{inj}/n$; by determining and analyzing the combustion differences determined by the use of the subsequent sub-injections instead of the single injection it is possible to determine the actual injection features of each injector 5. It is worth noting that the estimation of the actual injection features is performed only for one injector 5 at a time; i.e. only the injector 5 under test is driven to perform the n subsequent sub-injections, each having a duration $T_{inj}/n$, while all the other injectors 5 are driven to perform a single injection having a duration $T_{inj}$.

The above-described injection mode is diagrammatically shown in figure 3, in which it is apparent that an injector 5 under test is driven to perform subsequent sub-injections, each having a duration $T_{inj-n}$ (equal to $T_{inj}/n$), four times (n=4), while the other three injectors are driven to perform a single injection having a duration $T_{inj}$. It is worth noting that the injection time $T_{inj-n}$ of each sub-injection is exactly one quarter of the injection time $T_{inj}$ of the single injection. In other words, the situation is described by the following equations:

$$[2] \quad T_{inj} = G * Q_{inj} + T_{offset}$$

$$[3] \quad T_{inj-n} = T_{inj} / n$$

$$[4] \quad T_{inj-n} = G * Q_{inj-n} + T_{offset}$$

$$[5] \quad Q_{inj} = (T_{inj} - T_{offset}) / G$$

$$[6] \quad Q_{inj-n} = (T_{inj-n} - T_{offset}) / G$$

| | |
|---|---|
| $T_{inj}$ | injection time of the single injection |
| $Q_{inj}$ | amount of fuel injected during the single injection |
| n | number of sub-injections |
| $T_{inj-n}$ | injection time of each sub-injection |
| $Q_{inj-n}$ | amount of fuel injected during each sub- injection |
| G | gain value |
| $T_{offset}$ | offset value |

The number n of sub-injections may not be too high because the fuel time $T_{inj-n}$ of each sub-injection needs to be sufficiently higher than the offset value $T_{offset}$, because when the fuel time $T_{inj-n}$ of each sub-injection is too close to the offset value $T_{offset}$, the random errors induced by non-linearity phenomena of the injectors 5 become relevant.

Assuming that the amount $Q_A$ of air aspirated by each cylinder remains constant (hypothesis which is valid if the rate is stationary), the titre of the exhaust gases in the cylinder 2 under test (i.e. in the cylinder 2 associated to the injector 5 under test), by performing a single injection and by performing several sub-injections, is provided by the following equations:

$$[7] \quad \lambda_1 = Q_A / (AF_S * Q_{inj})$$

$$[8] \quad \lambda_2 = Q_A / (AF_S * Q_{inj-n} * n)$$

$\lambda_1$    exhaust gas titre in the cylinder 2 under test (i.e. in the cylinder 2 associated to the injector 5 under test) by performing a single injection;

$\lambda_2$    exhaust gas titre in the cylinder 2 under test (i.e. in the cylinder 2 associated to the injector 5 under test) by performing several sub-injections; $Q_A$ amount $Q_A$ of air aspirated by each cylinder 2;

$Q_{inj}$    amount of fuel injected during the single injection;

n    number of sub-injections; $Q_{inj-n}$ amount of fuel injected during each sub-injection.

By using the above-described equations and by means of simple mathematical steps, it is possible to obtain the following equations:

$$[9] \quad \frac{\lambda_2 - \lambda_1}{\lambda_1} = \frac{(n-1) \cdot T_{offset}}{T_{inj} - n \cdot T_{offset}}$$

$$[10] \quad T_{offset} = T_{inj} \cdot \frac{\dfrac{(\lambda_2 - \lambda_1)}{\lambda_1}}{n - 1 + n \cdot \dfrac{(\lambda_2 - \lambda_1)}{\lambda_1}}$$

$\lambda_1$    exhaust gas titre in the cylinder 2 under test (i.e. in the cylinder 2 associated to the injector 5 under test) by performing a single injection;

$\lambda_2$    exhaust gas titre in the cylinder 2 under test (i.e. in the cylinder 2 associated to the injector 5 under test) by performing several sub-injections;

n    number of sub-injections;

$T_{inj}$    injection time of the single injection;

$T_{offset}$    offset value.

The above-described formula [10] for obtaining the actual offset value $T_{offset}$ of each injector 5 is valid, but requires the knowledge of the exhaust gas titre in the cylinder 2 under test, i.e. in the cylinder 2 which receives the fuel from the injector 5. In other words, the actual use of the formula [10] is only possible if it is possible to measure the titre of the exhaust gases discharged from each cylinder 2, i.e. in the case in which a lambda probe is arranged in each exhaust pipe which connects the cylinder 2 to the exhaust manifold 4; however, such a solution which comprises a plurality of lambda probes 22 upstream of the catalyzer 11 is hardly present in internal combustion engines on the market for evident reasons of cost.

In the much more frequent case in which a single lambda probe 22 is arranged upstream of the catalyzer 11 (as shown in figure 1), it is possible to only measure the titre of the exhaust gases discharged from all the cylinders 2; in this case, the above-described formula [10] for obtaining the actual offset value $T_{offset}$ of an injector 5 needs to be slightly modified to take into account the inevitable asymmetries in exhaust gas mixing inside the exhaust manifold 4 and in the measurement of the titre of the exhaust gases performed by the lambda probe 22. In other words, the lambda probe 22 is inevitably closer to some cylinders 2 and farther away from other cylinders 2 and therefore the reading thereof is more susceptible to the exhaust gases discharged from some cylinders 2 and less susceptible to the exhaust gases discharged from other cylinders 2.

In the case in which a single lambda probe 22 is arranged upstream of the catalyzer 11 (as shown in figure 1), the above-described formula [10] can be modified as follows:

$$[11] \quad T_{offset-i} = T_{inj} \cdot \frac{\dfrac{1}{\alpha_i} \cdot \dfrac{(\lambda_2 - \lambda_1)}{\lambda_1}}{n - 1 + n \cdot \dfrac{(\lambda_2 - \lambda_1)}{\lambda_1} \cdot \dfrac{1}{\alpha_i}}$$

$\lambda_1$      exhaust gas titre in all the cylinders 2 by performing a single injection;
$\lambda_2$      exhaust gas titre in all the cylinders 2 by performing several sub-injections;
n      number of sub-injections;
$T_{inj}$      injection time of the single injection;
$T_{offset-i}$      offset value of the n-th injector 5;
$\alpha_i$      weight of the n-th injector 5, i.e. of the cylinder 2 associated to the n-th injector 5.

If the arrangement of the single lambda probe 22 upstream of the catalyzer 11 were perfectly symmetric with respect to the emission of exhaust gases from the cylinders 2, then the weights $\alpha_i$ of the four injectors would be all identical and equal to 0.25 (1/4); however, such an ideal condition is never present in a real internal combustion engine 1, in which it is necessary to typically determine the values of the weights $\alpha_i$ by experimental means.

For example, in order to determine the values of the weights $\alpha_i$, it is possible to measure all the variables contained in the equation [11] except for the weights $\alpha_i$ with specific instruments in the real internal combustion engine 1. Alternatively, in order to determine the values of the weights $\alpha_i$, it is possible to perform measurements on the real internal combustion engine 1 in which known fuel steps are performed (in rotation) at a stationary (stabilized) rate only in one cylinder 2 at a time with titre control off, and therefore the effects of such known fuel steps on the titre detected by the lambda probe 22 are measured; by analyzing the effects of such known fuel steps on the titre detected by the lambda probe 22 it is possible to obtain the value of the weight $\alpha_i$ of the cylinder 2 under test.

In order to determine the values of the weights $\alpha_i$, instead of switching off the titre control as described above it is possible to keep the titre control on to avoid causing an appreciable increase of polluting emissions; in this case, the percentage variation of the control variable is detected providing that possible adaptive strategies of the value of such a variable are inhibited.

It is important to underline that the values of the weights $\alpha_i$ depend nearly exclusively on the geometry of the exhaust manifold 4 and the position of the lambda probe 22, and thus the values of the weights $\alpha_i$ should not change significantly due to ageing and should not vary significantly from engine to engine; consequently, during a designing and set-up step, it is sufficient to determine the values of the weights $\alpha_i$ for a certain type of internal combustion engine 1 and to use such values of the weights $\alpha_i$ for all the internal combustion engines 1 of that type. Alternatively, it is possible to implement the above-described procedure for determining the values of the weights $\alpha_i$ in the electronic control unit 21 so that the electronic control unit 21 may cyclically, update the values of the weights $\alpha_i$ to compensate for the time drifts and/or production dispersions.

By way of example, in a real internal combustion engine 1, the following values of the weights $\alpha_i$ (expressed in percentage) were determined: 35.4%, 21.5%, 14.9%, 28.2%; it is important to note that some weights considerably differ from the theoretical value of 25% which is typical of an ideal condition. It is therefore apparent that without the presence of the weights $\alpha_i$, the equation [11] would be pointless because affected by an excessively high error.

To summarize the above, in the case of the internal combustion engine 1 illustrated in the accompanying figures and thus provided with a single lambda probe 22 upstream of the catalyzer 11, the recognition strategy for estimating the actual injection features of each injector 5 includes waiting for the internal combustion engine 1 to be at a stationary rate, i.e. for the number of revolutions and the delivered power to be constant, and thus the flow rate of the aspirated air and the amount of injected fuel to be constant. In stationary conditions, the exhaust gas titre $\lambda_1$ is measured in all the cylinders 2 by performing a single injection with all the injectors 5; after measuring the exhaust gas titre $\lambda_1$, an injector 5 under test is driven to perform n subsequent sub-injections, each having a duration $T_{inj-n}$ (equal to $T_{inj}/n$), while all the other injectors 5 are driven to perform a single injection having a duration $T_{inj}$ (as shown by way of example in figure 3). In these new conditions, the exhaust gas titre $\lambda_2$ is measured with the injector 5 under test by performing several sub-injections; obviously, in order to measure the exhaust gas titre $\lambda_2$ with sufficient accuracy, it is necessary to wait for a few instants for the transients to be exhausted and thus for the gas titre $\lambda_2$ to become stable.

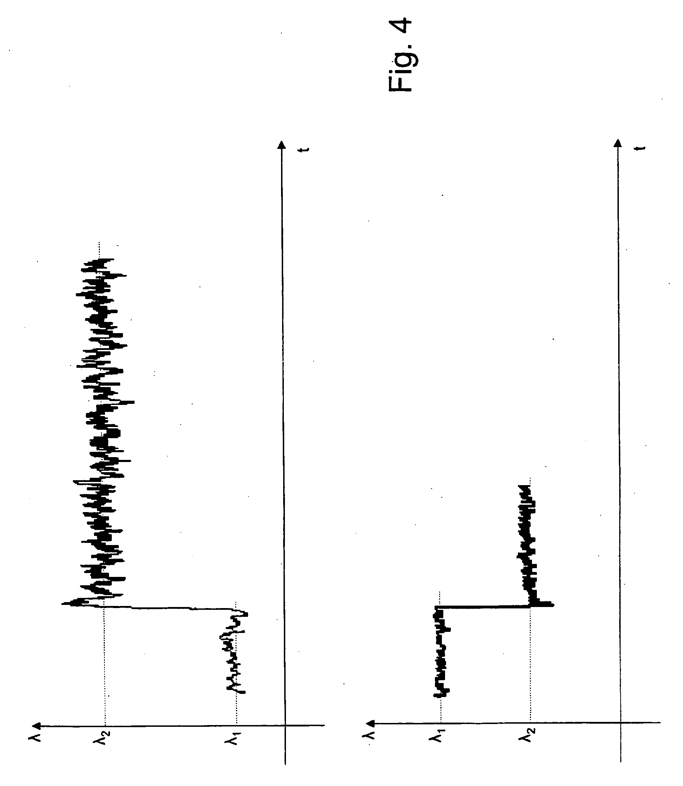

By way of example, figure 4 shows the evolution of the exhaust gas titre in all the cylinders 2 measured by the lambda probe 22 when performing the afore-described recognition strategy.

At this point, knowing the exhaust gas titre $\lambda_1$ by performing a single injection with all the injectors 5 and the exhaust gas titre $\lambda_2$ by performing several sub-injections only with the injector 5 under test (and obviously knowing the number n of sub-injections and the injection time $T_{inj}$), it is possible to apply the equation [11] to determine the actual offset value $T_{offset}$ of the injector 5 under test.

As previously mentioned, the lambda probes 22 and 23 may be either of the ON/OFF (switching) type or may be linear (i.e. of the UEGO type); in both cases, it is possible to determine the exhaust gas titre upstream and downstream of the catalyzer 11 (by means of estimation algorithms known in the literature or by means of a direct measurement, respectively). It is worth underlining that, in general, the learning procedure needs to comprise switching the titre control off otherwise there will be no exhaust gas titre drift following the multiple injection; alternatively, with the titre control on, it is possible to trace back the percentage variation of the exhaust gas titre by means of the percentage variation of the titre control variable.

Summarizing, when the probe 22 is of the linear type (i.e. the UEGO type), it is possible to switch the titre control off when learning how to directly measure the exhaust gas titre; this procedure allows to obtain a better accuracy, but on the other hand it could temporarily increase the polluting emissions and/or have negative effects on drivability. Alternatively, when the probe 22 is of the linear type (i.e. of the UEGO type), it is possible to keep the titre control on when learning, and then trace back the percentage variation of exhaust gas titre on the basis of the percentage variation of the control variable; this procedure could display less accuracy but has the advantage of not affecting polluting emissions and drivability.

When the probe 22 is of the ON/OFF (switching) type, it is possible to switch the titre control off when learning in order to directly estimate the titre of the exhaust gases; this procedure displays a very low accuracy due to the dispersion of the features, could temporarily increase the polluting emissions and could have negative effects on drivability. Alternatively, when the probe 22 is of the ON/OFF (switching) type, it is possible to keep the titre control on when learning and then trace back the percentage variation of the exhaust gas titre on the basis of the percentage variation of the control variable; this procedure allows to obtain a higher accuracy (however lower than the use of a lambda probe 22 of the linear type) and has the advantage of not affecting polluting emissions and drivability.

Obviously, the actual offset value $T_{offset}$ of each injector 5 may be determined several times in subsequent moments for determining a mean (possibly weighed) of the various measurements so as to reduce the effect of random errors. For example, the mean could be weighed according to the number of sub-injections (the higher the number of sub-injections, the higher the accuracy in determining the actual offset value $T_{offset}$) and according to the stability of the stationary rate (the stabler the stationary rate, the higher the accuracy in determining the actual offset value $T_{offset}$).

Furthermore, a single isolated estimation of the actual offset value $T_{offset}$ of an injector 5 excessively different from the nominal offset value $T_{offset}$ could be rejected because potentially affected by a high random error.

Since the offset value $T_{offset}$ depends on the pressure difference across the injector 5, the actual offset value $T_{offset}$ of each injector 5 should be repeated at different driving points (i.e. with different pressure values across the injector 5); alternatively, if the analytic dependency of the offset value $T_{offset}$ from the pressure difference across the injector 5 is known, it is apparent that the offset value $T_{offset}$ learnt in a driving point may take a more general valence because it allows to estimate the offset value $T_{offset}$ also in other driving points.

The above-described estimation method displays many advantages, because it is simple and cost-effective to implement, does not use a high power of calculation of the electronic control unit 21 and does not require the installation of additional components (specifically sensors or actuators) with respect to those already present in a modern internal combustion engine. Furthermore, the above-described estimation method is particularly effective in determining the actual offset value $T_{offset}$ of each injector 5; an experimental test has determined that by applying the equation [11] to a real internal combustion engine 1, it is possible to determine the actual offset value $T_{offset}$ of each injector 5 with a 3% error which is lower than the manufacturing tolerance equal to approximately 5% of the high range fuel injectors currently on the market; in other words, by applying the equation [11], it is possible to determine the actual offset value $T_{offset}$ of each injector 5 with an accuracy higher than the accuracy determined by modern production techniques and it is thus possible to improve the control performances of the internal combustion engine 1.

As previously mentioned, the calculation method suggested by patent application WO2005008050A1 comprises driving the injector under test to inject an amount of fuel to be injected by means of a single injection and then driving the injector under test to inject the same amount of fuel to be injected by means of n subsequent sub-injections (i.e., to feed a certain amount of fuel in a single injection and to feed the same amount of fuel in several subsequent sub-injections). By proceeding in this manner, the combustion differences between the single injection and the subsequent n sub-injections are exclusively due to the difference between the actual (i.e. real) offset value $T_{offset}$ and the nominal offset value $T_{offset}$; however, if such a difference is restricted, also the combustion differences will be restricted and thus difficult to be detected with the necessary accuracy. On the other hand, the method of the present invention includes performing a single injection having a duration $T_{inj}$ and immediately after performing n subsequent sub-injections, each, having a duration $T_{inj}/n$; in this manner, the presence of the offset value $T_{offset}$ is intentionally ignored and thus the combustion differences are entirely due to the actual offset value $T_{offset}$ and not only to the difference between the actual offset value $T_{offset}$ and the nominal offset value $T_{offset}$. It is thus apparent that the combustion differences are however more considerable and more detectable with greater accuracy as compared to the calculation method suggested by patent application WO2005008050A1.

Furthermore, the gain value G is used in the calculation method suggested by patent application WO2005008050A1 for determining the actual offset value $T_{offset}$; consequently, determining the actual offset value $T_{offset}$ is also affected by the error on the knowledge of the gain value G. Instead, the method of the present invention does not use the gain value G to determine the actual offset value $T_{offset}$.

It is worth noting that by applying the above-described estimation method it is not only possible to improve the quality of the control of the internal combustion engine 1, but it is also possible to use injectors with very high manufacturing tolerances, because the consequent high dispersion of the features of the injectors is completely compensated by detecting the actual offset value $T_{offset}$ of each injector 5.

Therefore, at the same time, by applying the above-described estimation method, the performances of the internal combustion engine 1 are improved, the injector construction and control methods are simplified, and the number of injectors which are rejected during end-of-production inspections is reduced (or nearly cancelled) (because even if an injector displays an actual offset value $T_{offset}$ relatively far from the nominal value, it may be profitably used by accurately knowing the corresponding actual offset value $T_{offset}$).

Finally, it is important to note that the above-described estimation method may be regardlessly applied either to a direct-injection internal combustion engine 1 (as shown in figure 1) or to an indirect-injection internal combustion engine.

**Claims**

1.  A method for determining the actual offset value of an injector (5) of an internal combustion engine (1); the method comprises the steps of:

    determining, when the engine is running at a stationary rate, a target injection time ($T_{inj}$) for the injector (5) ;
    driving, at the stationary rate, the injector (5) to perform a single injection having a duration equal to the target injection time ($T_{inj}$);
    subsequently and immediately afterwards driving, at the stationary rate, the injector (5) to perform n subsequent sub-injections; and
    determining the actual offset value ($T_{offset}$) of the injector (5) according to combustion differences by performing a single injection and by performing n sub-injections and assuming that the amount ($Q_A$) of air aspirated by each cylinder remains constant;
    the method is **characterized in that** each of the n sub-injections has a duration equal to one n-th of the target injection time ($T_{inj}$).

2.  A method according to claim 1, and comprising the further steps of:

    measuring the exhaust gas air/fuel ratio ($\lambda_1$) by performing the single injection;
    measuring the exhaust gas air/fuel ratio ($\lambda_2$) by performing the n sub-injections; and
    determining the actual offset value ($T_{offset}$) of the injector (5) according to the variation of the exhaust gas air/fuel ratio by performing the single injection and by performing the n sub-injections.

3.  A method according to claim 2, wherein the following equation is used to determine the actual offset value ($T_{offset}$) of the injector (5):

$$T_{offset} = T_{inj} \cdot \frac{\dfrac{(\lambda_2 - \lambda_1)}{\lambda_1}}{n - 1 + n \cdot \dfrac{(\lambda_2 - \lambda_1)}{\lambda_1}}$$

$\lambda_1$ exhaust gas air/fuel ratio in the cylinder (2) by performing the single injection;
$\lambda_2$ exhaust gas air/fuel ratio in the cylinder (2) by performing the n sub-injections;

n number of sub-injections;
$T_{inj}$ injection time of the single injection;
$T_{offset}$ actual offset value of the injector (5).

**4.** A method according to claim 2, wherein the internal combustion engine (1) comprises several injectors (5) which inject the fuel into corresponding cylinders (2); the method comprises the further steps of:

initially driving all the injectors (5) for performing a single injection having a duration equal to the target injection time ($T_{inj}$); and
subsequently driving one only injector (5) under test to perform n subsequent sub-injections each having a duration equal to one n-th of the target injection time ($T_{inj}$), while all the other injectors (5) are driven to perform a single injection having a duration equal to the target injection time ($T_{inj}$).

**5.** A method according to claim 4, wherein the air/fuel ratio ($\lambda$) of the exhaust gases discharged from each cylinder (2) is measured; the following equation is used to determine the actual offset value ($T_{offset}$) of the injector (5) under test:

$$T_{offset} = T_{inj} \cdot \frac{\dfrac{(\lambda_2 - \lambda_1)}{\lambda_1}}{n - 1 + n \cdot \dfrac{(\lambda_2 - \lambda_1)}{\lambda_1}}$$

$\lambda_1$ exhaust gas air/fuel ratio in the cylinder (2) coupled to the injector (5) under test by performing the single injection;
$\lambda_2$ exhaust gas air/fuel ratio in the cylinder (2) coupled to the injector (5) under test by performing the n sub-injections;
n number of sub-injections;
$T_{inj}$ injection time of the single injection;
$T_{offset}$ actual offset value of the injector (5) under test.

**6.** A method according to claim 4, wherein the air/fuel ratio ($\lambda$) of the exhaust gases totally discharged from all the cylinders (2) is measured; the following equation is used to determine the actual offset value ($T_{offset}$) of the injector (5) under test:

$$T_{offset-i} = T_{inj} \cdot \frac{\dfrac{1}{\alpha_i} \cdot \dfrac{(\lambda_2 - \lambda_1)}{\lambda_1}}{n - 1 + n \cdot \dfrac{(\lambda_2 - \lambda_1)}{\lambda_1} \cdot \dfrac{1}{\alpha_i}}$$

$\lambda_1$ exhaust gas air/fuel ratio in all the cylinders (2) by performing the single injection;
$\lambda_2$ exhaust gas air/fuel ratio in all the cylinders (2) by performing the n sub- injections;
n number of sub-injections;
$T_{inj}$ injection time of the single injection;
$T_{offset-i}$ offset value of the i-th injector (5) under test;
$\alpha_i$ weight of the i-th injector (5) under test, i.e. of the cylinder (2) associated to the i- th injector (5) under test, depending on and taking into account the geometry of a exhaust manifold (4) and the position of a lambda probe (22).

**7.** A method according to claim 6, wherein the weights ($\alpha_i$) of the injectors (5) are experimentally determined during a designing and set-up step of the internal combustion engine (1).

**8.** A method according to claim 6, wherein the weights ($\alpha_i$) of the injectors (5) are cyclically determined and updated to compensate for time drifts and/or production dispersions.

9. A method according to any one of the claims from 1 to 8 and comprising the further steps of:

   determining several times in subsequent moments the actual offset value ($T_{offset}$) of the injector (5); and
   performing an arithmetic mean between the various measurements of the actual offset value ($T_{offset}$).


**Patentansprüche**

1. Verfahren zum Bestimmen des gegenwärtigen Versatzwerts einer Einspritzdüse (5) eines Verbrennungsmotors (1); wobei das Verfahren die folgenden Schritte umfasst:

   Bestimmen einer Solleinspritzzeit ($T_{inj}$) für die Einspritzdüse (5) mit einer stationären Rate, wenn der Motor läuft;
   Antreiben der Einspritzdüse (5) mit der stationären Rate, um eine einzelne Einspritzung mit einer Dauer gleich der Solleinspritzzeit ($T_{inj}$) auszuführen;
   anschließend und unmittelbar danach Antreiben der Einspritzdüse (5) mit der stationären Rate, um n aufeinander folgende Untereinspritzungen auszuführen; und
   Bestimmen des gegenwärtigen Versatzwerts ($T_{offset}$) der Einspritzdüse (5) gemäß Verbrennungsunterschieden durch Ausführen einer einzelnen Einspritzung und durch Ausführen von n Untereinspritzungen und Annehmen, dass die Menge ($Q_A$) von Luft, die durch jeden Zylinder angesaugt wird, konstant bleibt;
   wobei das Verfahren **dadurch gekennzeichnet ist, dass** jede der n Untereinspritzungen eine Dauer gleich einem n-tel der Solleinspritzzeit ($T_{inj}$) hat.

2. Verfahren nach Anspruch 1, das die folgenden weiteren Schritte umfasst:

   Messen des Abgas-Luft/Kraftstoff-Verhältnisses ($\lambda_1$) durch Ausführen der einzelnen Einspritzung;
   Messen des Abgas-Luft/Kraftstoff-Verhältnisses ($\lambda_2$) durch Ausführen der n Untereinspritzungen; und
   Bestimmen des gegenwärtigen Versatzwerts ($T_{offset}$) der Einspritzdüse (5) gemäß der Veränderung des Abgas-Luft/Kraftstoff-Verhältnisses durch Ausführen der einzelnen Einspritzung und durch Ausführen der n Untereinspritzungen.

3. Verfahren nach Anspruch 2, wobei die folgende Gleichung verwendet wird, um den gegenwärtigen Versatzwert ($T_{offset}$) der Einspritzdüse (5) zu bestimmen:

$$T_{offset} = T_{inj} \cdot \frac{\dfrac{(\lambda_2 - \lambda_1)}{\lambda_1}}{n - 1 + n \cdot \dfrac{(\lambda_2 - \lambda_1)}{\lambda_1}}$$

   $\lambda_1$ Abgas-Luft/Kraftstoff-Verhältnis im Zylinder (2) beim Ausführen der einzelnen Einspritzung;
   $\lambda_2$ Abgas-Luft/Kraftstoff-Verhältnis im Zylinder (2) beim Ausführen der n Untereinspritzungen;
   n Anzahl von Untereinspritzungen;
   $T_{inj}$ Einspritzzeit der einzelnen Einspritzung;
   $T_{offset}$ gegenwärtiger Versatzwert der Einspritzdüse (5).

4. Verfahren nach Anspruch 2, wobei der Verbrennungsmotor (1) mehrere Einspritzdüsen (5) umfasst, die den Kraftstoff in entsprechende Zylinder (2) einspritzen; wobei das Verfahren die folgenden weiteren Schritte umfasst:

   zunächst Antreiben aller Einspritzdüsen (5) zum Ausführen einer einzelnen Einspritzung mit einer Dauer gleich der Solleinspritzzeit ($T_{inj}$); und
   anschließend Antreiben nur einer getesteten Einspritzdüse (5), um n aufeinander folgende Untereinspritzungen mit jeweils einer Dauer gleich einem n-tel der Solleinspritzzeit ($T_{inj}$) auszuführen, während alle anderen Einspritzdüsen (5) angetrieben werden, um eine einzelne Einspritzung mit einer Dauer gleich der Solleinspritzzeit

($T_{inj}$) auszuführen.

**5.** Verfahren nach Anspruch 4, wobei das Luft/Kraftstoff-Verhältnis ($\lambda$) der Abgase, die von jedem Zylinder (2) ausgelassen werden, gemessen wird; wobei die folgende Gleichung verwendet wird, um den gegenwärtigen Versatzwert ($T_{offset}$) der getesteten Einspritzdüse (5) zu bestimmen:

$$T_{offset} = T_{inj} \cdot \frac{\dfrac{(\lambda_2 - \lambda_1)}{\lambda_1}}{n - 1 + n \cdot \dfrac{(\lambda_2 - \lambda_1)}{\lambda_1}}$$

$\lambda_1$ Abgas-Luft/Kraftstoff-Verhältnis im Zylinder (2), der mit der getesteten Einspritzdüse (5) gekoppelt ist, beim Ausführen der einzelnen Einspritzung;
$\lambda_2$ Abgas-Luft/Kraftstoff-Verhältnis im Zylinder (2), der mit der getesteten Einspritzdüse (5) gekoppelt ist, beim Ausführen der n Untereinspritzungen;
n Anzahl von Untereinspritzungen;
$T_{inj}$ Einspritzzeit der einzelnen Einspritzung;
$T_{offset}$ gegenwärtiger Versatzwert der getesteten Einspritzdüse (5).

**6.** Verfahren nach Anspruch 4, wobei das Luft/Kraftstoff-Verhältnis ($\lambda$) der Abgase, die insgesamt aus allen Zylindern (2) ausgelassen werden, gemessen wird; wobei die folgende Gleichung verwendet wird, um den gegenwärtigen Versatzwert ($T_{offset}$) der getesteten Einspritzdüse (5) zu bestimmen:

$$T_{offset-i} = T_{inj} \cdot \frac{\dfrac{1}{\alpha_i} \cdot \dfrac{(\lambda_2 - \lambda_1)}{\lambda_1}}{n - 1 + n \cdot \dfrac{(\lambda_2 - \lambda_1)}{\lambda_1} \cdot \dfrac{1}{\alpha_i}}$$

$\lambda_1$ Abgas-Luft/Kraftstoff-Verhältnis in allen Zylindern (2) beim Ausführen der einzelnen Einspritzung;
$\lambda_2$ Abgas-Luft/Kraftstoff-Verhältnis in allen Zylindern (2) beim Ausführen der n Untereinspritzungen;
n Anzahl von Untereinspritzungen;
$T_{inj}$ Einspritzzeit der einzelnen Einspritzung;
$T_{offset-i}$ Versatzwert der i-ten getesteten Einspritzdüse (5);
$\alpha_i$ Gewicht der i-ten getesteten Einspritzdüse (5), d.h. des Zylinders (2), der der i-ten getesteten Einspritzdüse (5) zugeordnet ist, in Abhängigkeit von und unter Berücksichtigung der Geometrie eines Auslasskrümmers (4) und der Position einer Lambda-Sonde (22).

**7.** Verfahren nach Anspruch 6, wobei die Gewichte ($\alpha_i$) der Einspritzdüsen (5) während eines Konstruktions- und Einrichtungsschritts des Verbrennungsmotors (1) experimentell bestimmt werden.

**8.** Verfahren nach Anspruch 6, wobei die Gewichte ($\alpha_i$) der Einspritzdüsen (5) zyklisch bestimmt und aktualisiert werden, um Zeitabweichungen und/oder Produktstreuungen zu kompensieren.

**9.** Verfahren nach einem der Ansprüche 1 bis 8 und mit den weiteren Schritten:

mehrmaliges Bestimmen des gegenwärtigen Versatzwerts ($T_{offset}$) der Einspritzdüse (5) in aufeinander folgenden Momenten; und
Bilden eines arithmetischen Mittelwerts zwischen den verschiedenen Messungen des gegenwärtigen Versatzwerts ($T_{offset}$).

**Revendications**

1. Procédé pour déterminer la valeur réelle de décalage d'un injecteur (5) d'un moteur à combustion interne (1) ; le procédé comprenant les étapes suivantes :

   déterminer, lorsque le moteur fonctionne en régime stationnaire, un temps d'injection cible ($T_{inj}$) pour l'injecteur (5) ;

   en régime stationnaire, piloter l'injecteur (5) pour exécuter une injection unique d'une durée égale au temps d'injection cible ($T_{inj}$);

   ensuite et immédiatement après, en régime stationnaire, piloter l'injecteur (5) pour exécuter n sous-injections subséquentes ; et

   déterminer la valeur réelle de décalage ($T_{offset}$) de l'injecteur (5) en fonction de différences de combustion en exécutant une injection unique et en exécutant n sous-injections, et en supposant que la quantité ($Q_A$) d'air aspiré par chaque cylindre reste constante ;

   procédé **caractérisé en ce que** chacune des n sous-injections a une durée égale à un n-ième du temps d'injection cible ($T_{inj}$).

2. Procédé selon la revendication 1, et comprenant les étapes supplémentaires suivantes :

   mesurer le rapport air/carburant des gaz d'échappement ($\lambda_1$) en exécutant l'injection unique ;

   mesurer le rapport air/carburant des gaz d'échappement ($\lambda_2$) en exécutant les n sous-injections ; et

   déterminer la valeur réelle de décalage ($T_{offset}$) de l'injecteur (5) en fonction de la variation du rapport air/carburant des gaz d'échappement en exécutant l'injection unique et en exécutant les n sous-injections.

3. Procédé selon la revendication 2, dans lequel l'équation suivante sert à déterminer la valeur réelle de décalage ($T_{offset}$) de l'injecteur (5) :

$$T_{offset} = T_{inj} \cdot \frac{\dfrac{(\lambda_2 - \lambda_1)}{\lambda_1}}{n - 1 + n \cdot \dfrac{(\lambda_2 - \lambda_1)}{\lambda_1}}$$

   $\lambda_1$ rapport air/carburant des gaz d'échappement dans le cylindre (2) en exécutant l'injection unique ;

   $\lambda_2$ rapport air/carburant des gaz d'échappement dans le cylindre (2) en exécutant les n sous-injections ;

   n nombre de sous-injections ;

   $T_{inj}$ temps d'injection de l'injection unique ;

   $T_{offset}$ valeur réelle de décalage de l'injecteur (5)

4. Procédé selon la revendication 2, dans lequel le moteur à combustion interne (1) comprend plusieurs injecteurs (5) qui injectent le carburant dans des cylindres (2) correspondants ; procédé comprenant, en outre, les étapes suivantes :

   tout d'abord, piloter tous les injecteurs (5) pour exécuter une injection unique d'une durée égale au temps d'injection cible ($T_{inj}$) ; et

   ensuite piloter un seul injecteur (5) sous test pour exécuter n sous-injections subséquentes, chacune ayant une durée égale à un n-ième du temps d'injection cible ($T_{inj}$), tandis que tous les autres injecteurs (5) sont pilotés pour exécuter une injection unique d'une durée égale au temps d'injection cible ($T_{inj}$).

**5.** Procédé selon la revendication 4, dans lequel on mesure le rapport air/carburant ($\lambda$) des gaz d'échappement de chaque cylindre (2); l'équation suivante sert à déterminer la valeur réelle de décalage ($T_{offset}$) de l'injecteur (5) sous test :

$$T_{offset} = T_{inj} \cdot \frac{\dfrac{(\lambda_2 - \lambda_1)}{\lambda_1}}{n - 1 + n \cdot \dfrac{(\lambda_2 - \lambda_1)}{\lambda_1}}$$

$\lambda_1$ rapport air/carburant des gaz d'échappement dans le cylindre (2) couplé à l'injecteur (5) sous test en exécutant l'injection unique ;
$\lambda_2$ rapport air/carburant des gaz d'échappement dans le cylindre (2) couplé à l'injecteur (5) sous test en exécutant les n sous-injections ;
n nombre de sous-injections ;
$T_{inj}$ temps d'injection de l'injection unique ;
$T_{offset}$ valeur réelle de décalage de l'injecteur (5) sous test

**6.** Procédé selon la revendication 4, dans lequel on mesure le rapport air/carburant ($\lambda$) des gaz d'échappement totalement évacués de tous les cylindres (2) ; l'équation suivante sert à déterminer la valeur réelle de décalage ($T_{offset}$) de l'injecteur sous test :

$$T_{offset-i} = T_{inj} \cdot \frac{\dfrac{1}{\alpha_i} \cdot \dfrac{(\lambda_2 - \lambda_1)}{\lambda_1}}{n - 1 + n \cdot \dfrac{(\lambda_2 - \lambda_1)}{\lambda_1} \cdot \dfrac{1}{\alpha_i}}$$

$\lambda1$ rapport air/carburant des gaz d'échappement dans tous les cylindres (2) en exécutant l'injection unique ;
$\lambda2$ rapport air/carburant des gaz d'échappement dans tous les cylindres (2) en exécutant les n sous-injections ;
n nombre de sous-injections ;
$T_{inj}$ temps d'injection de l'injection unique ;
$T_{offset-i}$ valeur réelle de décalage du i-[ième] injecteur (5) sous test ;
$\alpha_i$ poids du i-[ième] injecteur (5) sous test, c-à-d. du cylindre (2) associé au i-[ième] injecteur (5) sous test, en fonction de et en prenant en compte la géométrie d'un collecteur d'échappement (4) et la position d'une sonde lambda (22).

**7.** Procédé selon la revendication 6, dans lequel les poids ($\alpha_i$) des injecteurs (5) sont déterminés par voie expérimentale pendant une étape de calcul et de réglage du moteur à combustion interne (1).

**8.** Procédé selon la revendication 6, dans lequel les poids ($\alpha_i$) des injecteurs (5) sont déterminés et actualisés cycliquement pour compenser des dérives temporelles et/ou dispersions de production.

**9.** Procédé selon l'une quelconque des revendications 1 à 8, comprenant, en outre, les étapes suivantes :

déterminer à plusieurs reprises à des moment successifs la valeur réelle de décalage ($T_{offset}$) de l'injecteur (5) ; et
réaliser une moyenne arithmétique entre les différentes mesures de la valeur réelle de décalage $T_{offset}$.

Fig. 1

EP 2 108 804 B1

$T_{inj}$

$T_{offset}$

G

$Q_{inj}$

## Fig. 2

$T_{inj-n}$

$T_{inj}$

## Fig. 3

Fig. 4

**EP 2 108 804 B1**

**REFERENCES CITED IN THE DESCRIPTION**

**Patent documents cited in the description**

- WO 2005008050 A
- WO 2005008050 A1
- US 2006007936 A
- EP 1077321 A2